# EUROPÄISCHE PATENTSCHRIFT

(11) **EP 2 705 929 B1**
(45) Veröffentlichungstag und Bekanntmachung des Hinweises auf die Patenterteilung: **14.04.2021**
(21) Anmeldenummer: 12183261.2
(22) Anmeldetag: 06.09.2012
(51) Int. Cl.: B23Q 16/00, G01D 5/14, H01H 21/28, G01N 35/10

(54) **Justagesystem für ein Transfersystem in einem in vitro-Diagnostiksystem**
Adjustment system for a transfer system in an in-vitro diagnostic system
Système d'ajustement pour un système de transfert dans un système de diagnostic in vitro

(43) Veröffentlichungstag der Anmeldung: 12.03.2014
(73) Patentinhaber: Siemens Healthcare Diagnostics Products GmbH, 35041 Marburg (DE)
(72) Erfinder: Wiedekind-Klein, Alexander, 56812 Cochem (DE); Herz, Achim, 64521 Gross-Gerau (DE)

(56) Entgegenhaltungen:
- CH-A- 414 798
- US-A- 3 819 888
- US-A1- 2003 054 543
- US-A1- 2010 176 806

## Beschreibung

Die Erfindung betrifft ein Justagesystem für ein Transfersystem in einem in vitro-Diagnostiksystem, wobei das Justagesystem ein Kontaktelement umfasst, welches an einem bewegbaren Element des Transfersystems angeordnet ist.

Zahlreiche Nachweis- und Analyseverfahren zur Bestimmung physiologischer Parameter in Körperflüssigkeitsproben oder biologischen Proben werden heute automatisiert in großer Anzahl in entsprechenden in vitro-Diagnostiksystemen durchgeführt. Hierfür werden für Proben, Reagenzien und auch für die eigentliche Nachweisreaktion geeignete, auch als Küvetten bezeichnete, Gefäße verwendet. Diese umfassen üblicherweise eine geschlossene Umwandung sowie eine gegebenenfalls verschließbare Öffnung zur Aufnahme der jeweils zu analysierenden Flüssigkeit.

Heutige Geräte sind in der Lage, eine Vielzahl von Nachweisreaktionen und Analysen mit einer Probe durchzuführen. Hierzu umfassen derartige in vitro-Diagnostiksysteme üblicherweise eine Aufnahmeposition für ein Reaktionsgefäß sowie ein der Aufnahmeposition zugeordnetes Analysesystem. Für komplexe, mehrere Prozessschritte umfassende Testverfahren wird das Probengefäß in der Regel mehrfach zu verschiedenen Zugabe- und/oder Reaktionsstationen transportiert. Um eine Vielzahl von Untersuchungen automatisiert durchführen zu können, verfügen automatische Analyzer über Transfersysteme, d.h. Vorrichtungen zum räumlichen Transfer der Gefäße, wie z.B. Transferarme, Transportbänder, drehbare Transporträder oder -teller. Das Gerät umfasst dabei eine Steuereinheit, die mittels entsprechender Software in der Lage ist, die Arbeitsschritte für die gewünschten Analysen weitgehend selbstständig zu planen und abzuarbeiten.

Bei der Montage eines in vitro-Diagnostiksystems bleibt stets eine gewisse Ungenauigkeit hinsichtlich der Positionierung insbesondere der Transfersysteme bestehen. Da diese jedoch für den automatisierten Ablauf und das genaue Zusammenwirken exakte Positionierungsdaten benötigen, ist eine exakte Justage notwendig. Diese kann entweder manuell mit Hilfe von Justagemarken oder automatisch erfolgen.

Für die automatische Justage ist üblicherweise zunächst ein entsprechender Sensor am Antrieb des jeweils zu justierenden beweglichen Elements des Transfersystems, z.B. an einem Teil eines Transferarms vorhanden, der an die Steuereinheit Informationen über die aktuelle Position des Antriebs weitergibt. Der Transferarm wird dann von der Steuereinheit kontrolliert auf eine Justagemarke zubewegt. Bislang bekannte Justagesysteme funktionieren häufig auf kapazitiver Basis, wobei als Kontaktelement eine Nadel an dem beweglichen Element auf eine kleine Metalloberfläche an der Justagemarke geführt wird. Wird eine Berührung erkannt, speichert die Steuereinheit die zugehörige Position des Antriebs ab. US 2003/054543 A1 beschreibt ein Analysegerät bei dem die Position eines verfahrbareren Arms mittels einer Kamera und Hilfsmarkierungen genau bestimmt werden kann.

Aufgabe der vorliegenden Erfindung ist es, ein Justagesystem bereit zu stellen, welches eine schnellere automatisierte Justage von Transfersystemen in einem in vitro-Diagnostiksystem erlaubt.

Diese Aufgabe wird erfindungsgemäß gelöst, indem das Kontaktelement mittels eines Gelenkelements an dem bewegbaren Element angeordnet ist, wobei das Gelenkelement selbstrückstellend ausgestaltet ist, und wobei einem Abstand zwischen Kontaktelement und bewegbarem Element ein Abstandsmesssensor zugeordnet ist.

Die Erfindung hat den Vorteil, dass eine schnellere automatisierte Justage von Transfersystemen in einem in vitro-Diagnostiksystem möglich ist, wenn die Justage ohne starre und vergleichsweise empfindliche Bauteile wie insbesondere die bisher verwendeten Nadeln zur kapazitiven Messung auskommt. Wird das Kontaktelement an einem beweglichen Element des Transfersystems gelagert und ist selbstrückstellend ausgestaltet, d.h. das Gelenk entwickelt bei einer Auslenkung aus einer definierten Ruhelage Rückstellkräfte, z.B. durch Federn oder andere elastische Bauteile, so kann eine Berührung durch die Auslenkung des Kontaktelements und des Gelenks ermittelt werden. Dazu ist einem Abstand zwischen Kontaktelement und bewegbarem Element ein Abstandsmesssensor zugeordnet. Hierbei muss der Abstandsmesssensor keineswegs eine kontinuierlich korrekte absolute Größe für den Abstand ermitteln können, sondern eine einfache Feststellung einer relativen Änderung des Abstandes ist ausreichend. Durch eine Auslenkung aus der Ruhelage kann nämlich bereits eine Berührung einer definierten Justagemarke im in vitro-Diagnostiksystem erkannt werden und so eine Positionsjustierung durchgeführt werden.

Vorteilhafterweise umfasst der Abstandsmesssensor einen Hall-Sensor und einen Magneten. Dabei ist jeweils an einem der Bauteile der Magnet und an dem anderen Bauteil der Hall-Sensor angebracht. Eine Veränderung der relativen Position des Magneten zum Hall-Sensor bedingt eine Veränderung des erzeugten Magnetfeldes im Hall-Sensor und ermöglicht so eine Kontakterkennung des Kontaktelements an einer Justagemarke. Durch die selbstrückstellenden Eigenschaften des Gelenkelements ist der Magnet ohne Berührung des Kontaktelements stets im selben Abstand zum Hall-Sensor, so dass hier stets dasselbe Magnetfeld anliegt. Eine magnetische Abstandssensorik hat gerade gegenüber der kapazitiven den Vorteil, dass sie besonders resistent gegen äußere Einflüsse durch elektromagnetische Felder von z.B. Mobiltelefonen ist.

Vorteilhafterweise ist der Hall-Sensor dabei an dem bewegbaren Element und der Magnet an dem Kontaktelement angeordnet. Grundsätzlich ist der Aufbau zur Abstandsmessung symmetrisch austauschbar. Allerdings ist der Magnet lediglich ein passives Element, während der Hall-Sensor das aktive, signalproduzierende Element darstellt. Da die Signale ohnehin über das bewegliche Element und dessen Antrieb in die Steuereinheit geleitet werden, verkürzt eine derartige Anbringung die Signalwege und vereinfacht die Konstruktion.

In vorteilhafter Ausgestaltung ist das Gelenkelement für eine mehrdimensionale Bewegung ausgebildet. Dadurch ergibt sich eine erhebliche Vereinfachung der Justage, da die Justage mit demselben Kontaktelement in jeder Raumrichtung durchgeführt werden kann. Zwar ändert sich die Bewegungsrichtung des Gelenks bei einem Kontakt des Kontaktelements mit einem Justagemarker je nach der Richtung der Annäherung. Mit dem Kontakt ist aber in jedem Fall eine Abstandsänderung verbunden, auf die der Abstandsmesssensor reagiert.

In besonders vorteilhafter Ausgestaltung umfasst das Gelenkelement eine Gummimasse, die das Kontaktelement und das bewegbare Element verbindet. Hierdurch ergibt sich eine besonders einfache Ausgestaltung des Gelenkelements, da Gummi vorteilhafte Eigenschaften verbindet: Das Gelenk ist lange haltbar und wenig wartungsanfällig, der Gummi ermöglicht eine Bewegung in jede Dimension und bewegt sich selbstständig auf Grund seiner Elastizität in die Ruheposition zurück.

Ein Transfersystem, insbesondere ein Transferarm weist typischerweise eine Funktionseinrichtung auf, die typischerweise am Ende des Transferarms angeordnet ist und je nach konkretem Einsatz des Transferarms unterschiedlich ausgestaltet ist. Diese Funktionseinrichtung ist vorteilhafterweise an dem Kontaktelement angeordnet. Dies erhöht einerseits die Genauigkeit der Justage, da die Funktionseinrichtung gerade das Bauteil des Transfersystems ist, welches mit anderen Bauteilen des in vitro-Diagnostiksystems zusammenwirkt und daher genau ausjustiert sein muss. Andererseits wirkt das selbstrückstellende Gelenkelement dabei als Federung für die Funktionseinrichtung, was im Zusammenspiel mit anderen Bauteilen des in vitro-Diagnostiksystems gewünscht sein kann. Vorteilhafterweise umfasst die Funktionseinrichtung eine Greifeinrichtung zum Greifen von Proben- oder Reagenzgefäßen und/oder eine Pipettiereinrichtung zum Transport von Flüssigkeiten.

In weiterer vorteilhafter Ausgestaltung ist die Funktionseinrichtung dabei in Bezug auf das Gelenkelement an einer dem Abstandsmesssensor abgewandten Seite angeordnet. Damit wirkt das Kontaktelement praktisch als Hebel über dem Gelenkelement. Dadurch kann der Abstand des Abstandsmesssensors vom Gelenkelement vergrößert werden, womit sich auch die Auslenkung am Abstandsmesssensor erhöht. Dies verbessert die Genauigkeit der Messung.

Ein Transfersystem für ein in vitro-Diagnostiksystem umfasst vorteilhafterweise ein beschriebenes Justagesystem. Ein automatisiertes in vitro-Diagnostiksystem umfasst ebenfalls vorteilhafterweise ein derartiges Transfersystem und/oder ein beschriebenes Justagesystem.

Die mit der Erfindung erzielten Vorteile bestehen insbesondere darin, dass durch die Verwendung eines über ein Gelenk angebrachten Kontaktelements mit einem Abstandsmesssensor kleine mechanische Bewegungen in alle drei Dimensionen erfasst werden können und damit eine schnellere und exaktere Justage möglich wird. Insbesondere ist keine manuelle Justage mehr notwendig. Das Gerät kann den aktuellen Zustand automatisch erfassen und die dabei ermittelten Faktoren sofort und ohne notwendige Unterstützung eines Benutzers verwenden. Hierbei gibt es keine Einschränkung der Bewegungsrichtung, da eine Justage in alle drei Raumrichtungen möglich ist.

Die Erfindung wird anhand einer Zeichnung näher erläutert. Darin zeigen:
- Figur 1: eine schematische Darstellung eines Transfersystems in Form eines Transferarms bei der automatischen Justage in einer ersten Raumrichtung, und
- Figur 2: eine schematische Darstellung des Transfersystems bei der automatischen Justage in einer zweiten Raumrichtung.

Gleiche Teile sind in allen Figuren mit denselben Bezugszeichen versehen.

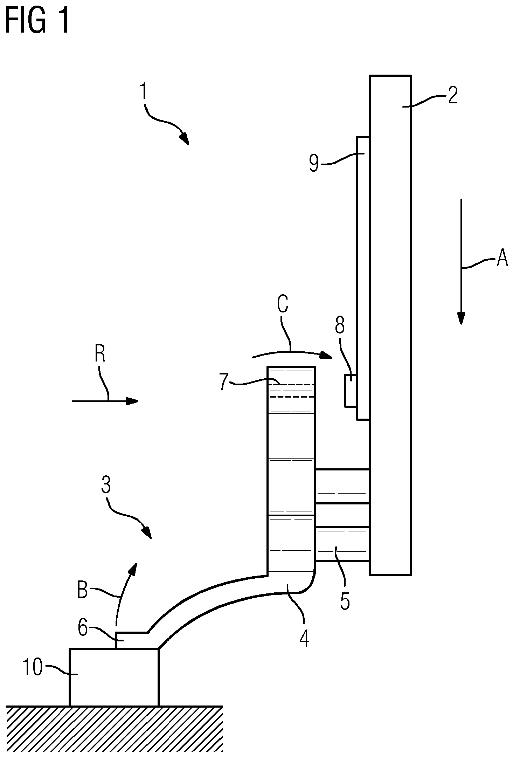

Figur 1 zeigt eine schematische Darstellung eines Transfersystems 1 in Form eines Transferarms in einem nicht dargestellten in vitro-Diagnostiksystem. Das Transfersystem 1 umfasst ein bewegliches Element 2, welches durch einen nicht näher dargestellten Antrieb frei bewegt werden kann. Die Steuerung des beweglichen Elements wird von einer ebenfalls nicht näher dargestellten Steuereinheit gesteuert. Am Antrieb befinden sich entsprechende Sensoren, die der Steuereinheit Informationen über die aktuelle Stellung des Antriebs liefern.

Zur genauen Justage des Transfersystems 1 ist ein Justagesystem 3 vorgesehen, welches ein Kontaktelement 4 umfasst, das mittels eines Gelenkelements 5 an dem beweglichen Element 2 des Transfersystems 1 angebracht ist. Das Gelenkelement 5 besteht aus zwei Gummiblöcken, die in einem Abstand jeweils das Kontaktelement 4 und das bewegliche Element 2 verbinden. Das Gelenkelement 5 ermöglicht so eine mehrdimensionale Bewegung von Kontaktelement 4 und beweglichem Element 2 gegeneinander, stellt sich jedoch selbstständig in die Ruheposition zurück.

An dem Kontaktelement 4 ist eine als Küvettengreifer ausgelegte Funktionseinrichtung 6 angeordnet. Diese dient zum Ergreifen von Proben- oder Reagenzgefäßen. Mittels des Transfersystems 1 werden diese dann innerhalb des in vitro-Diagnostiksystems transportiert. An dem von der Funktionseinrichtung 6 entfernten Ende des Kontaktelements 4 ist ein Magnet 7 angeordnet. Dem Magnet 7 ist im gegenüber liegenden Bereich auf dem beweglichen Element 2 ein Hall-Sensor 8 auf einer Leiterplatte 9 zugeordnet. Der Hall-Sensor 8 detektiert Änderungen der Relativposition des Magneten 7 in jede Richtung durch die Änderung des magnetischen Feldes und leitet diese Information über die Leiterplatte 9 der Steuereinheit zu. Magnet 7 und Hall-Sensor 8 bilden somit einen Abstandsmesssensor.

Die Justage wird durchgeführt, indem das Kontaktelement 4 an eine Justagemarke 10 geführt wird. In Figur 1 wird das Transfersystem in Richtung A bewegt. An der zu bestimmenden Position stößt das Kontaktelement 4 mit der Funktionseinrichtung 6 an die Justagemarke 10. In diesem Moment führt das Kontaktelement 4 eine Ausweichbewegung B aus. Dies ist durch die Elastizität des Gelenkelements 5 möglich. In Ruheposition haben der Magnet 7 im Kontaktelement 4 und der Hall-Sensor 8 einen bestimmten Abstand. Die Ausweichbewegung des Kontaktelements 4 resultiert in einer Veränderung dieses Abstandes, dargestellt durch die Bewegung C. Dadurch ändert sich die vom Hall-Sensor 8 gemessene Magnetfeldstärke. Die Position der Justagemarke 10 ist somit erkannt und wird von der Steuereinheit zur Justage ausgewertet.

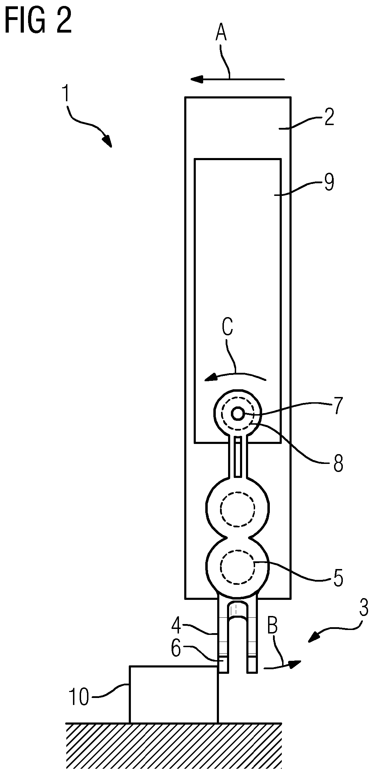

Figur 2 zeigt das Transfersystem 1 aus Figur 1 aus der Richtung R, dargestellt in Figur 1 in einer halbtransparenten Darstellung. Sämtliche Bauteile aus Figur 1 sind auch hier dargestellt, allerdings zeigt Figur 2, dass auch eine Justage in andere Raumrichtungen möglich ist. Die Richtung der Bewegung an die Justagemarke 10 ist wiederum als Bewegung A dargestellt, wobei die Bewegung A nunmehr senkrecht zur Bewegung A in Figur 1 steht. Auch in dieser Richtung ist eine Justage möglich, ohne das Justagesystem 3 zu verändern, dargestellt durch die Bewegungen B und C.

### BEZUGSZEICHENLISTE

- 1: Transfersystem
- 2: bewegliches Element
- 3: Justagesystem
- 4: Kontaktelement
- 5: Gelenkelement
- 6: Funktionseinrichtung
- 7: Magnet
- 8: Hall-Sensor
- 9: Leiterplatte
- 10: Justagemarke

## Patentansprüche

1. Automatisiertes in vitro-Diagnostiksystem mit einem Transfersystem (1) und einem Justagesystem (3) für das Transfersystem (1), **dadurch gekennzeichnet, dass** das Justagesystem (3) ein Kontaktelement (4) umfasst, welches an einem bewegbaren Element (2) des Transfersystems (1) mittels eines Gelenkelements (5) angeordnet ist, wobei das Gelenkelement (5) selbstrückstellend ausgestaltet ist und für eine mehrdimensionale Bewegung ausgebildet ist, und wobei einem Abstand zwischen Kontaktelement (4) und bewegbarem Element (2) ein Abstandsmesssensor (7, 8) zugeordnet ist.

2. In vitro-Diagnostiksystem nach Anspruch 1, bei dem der Abstandsmesssensor (7, 8) einen Hall-Sensor (8) und einen Magneten (7) umfasst.

3. In vitro-Diagnostiksystem nach Anspruch 2, bei dem der Hall-Sensor (8) an dem bewegbaren Element (2) und der Magnet (7) an dem Kontaktelement (4) angeordnet ist.

4. In vitro-Diagnostiksystem nach einem der vorhergehenden Ansprüche, bei dem das Gelenkelement (5) eine Gummimasse umfasst, die das Kontaktelement (4) und das bewegbare Element (2) verbindet.

5. In vitro-Diagnostiksystem nach einem der vorhergehenden Ansprüche, bei dem an dem Kontaktelement (4) eine Funktionseinrichtung (6) angeordnet ist.

6. In vitro-Diagnostiksystem nach Anspruch 5, bei dem die Funktionseinrichtung (6) eine Greifeinrichtung und/oder eine Pipettiereinrichtung umfasst.

7. In vitro-Diagnostiksystem nach Anspruch 5 oder 6, bei dem die Funktionseinrichtung (6) in Bezug auf das Gelenkelement (5) an einer dem Abstandsmesssensor (7, 8) abgewandten Seite angeordnet ist.

## Claims

1. Automated in-vitro diagnostics system comprising a transfer system (1) and an adjustment system (3) for the transfer system (1), **characterized in that** the adjustment system (3) comprises a contact element (4), which is arranged at a movable element (2) of the transfer system (1) by means of a joint element (5), wherein the joint element (5) has a self-resetting design and is designed for a multi-dimensional movement, and wherein a distance measuring sensor (7, 8) is associated with a distance between the contact element (4) and the movable element (2).

2. In-vitro diagnostics system according to Claim 1, wherein the distance measuring sensor (7, 8) comprises a Hall sensor (8) and a magnet (7).

3. In-vitro diagnostics system according to Claim 2, wherein the Hall sensor (8) is arranged at the movable element (2) and the magnet (7) is arranged at the contact element (4).

4. In-vitro diagnostics system according to any one of the preceding claims, wherein the joint element (5) comprises a rubber body, which connects the contact element (4) and the movable element (2).

5. In-vitro diagnostics system according to any one of the preceding claims, wherein a functional apparatus (6) is arranged at the contact element (4).

6. In-vitro diagnostics system according to Claim 5, wherein the functional apparatus (6) comprises a gripper apparatus and/or a pipetting apparatus.

7. In-vitro diagnostics system according to Claim 5 or 6, wherein, in respect of the joint element (5), the functional apparatus (6) is arranged at a side facing away from the distance measuring sensor (7, 8).

## Revendications

1. Système automatisé de diagnostic in vitro, comprenant un système (1) de transfert et un système (3) d'ajustement du système (1) de transfert, **caractérisé en ce que** le système (3) d'ajustement comprend un élément (4) de contact, qui est monté sur un élément (2) mobile du système (1) de transfert au moyen d'un élément (5) d'articulation, l'élément (5) d'articulation est conformé à autorappel et est constitué pour un déplacement pluridimensionnel, et dans lequel un capteur (7, 8) de mesure de distance est associé à une distance entre l'élément (4) de contact et l'élément (2) mobile.

2. Système de diagnostic in vitro suivant la revendication 1, dans lequel le capteur (7, 8) de distance comprend un capteur (8) de Hall et un aimant (7).

3. Système de diagnostic in vitro suivant la revendication 2, dans lequel le capteur (8) de Hall est monté sur l'élément (2) mobile et l'aimant (7) sur l'élément (4) de contact.

4. Système de diagnostic in vitro suivant l'une des revendications précédentes, dans lequel l'élément (5) d'articulation comprend une masse de caoutchouc, qui relie l'élément (4) de contact et l'élément (2) mobile.

5. Système de diagnostic in vitro suivant l'une des revendications précédentes, dans lequel un dispositif (6) fonctionnel est monté sur l'élément (4) de contact.

6. Système de diagnostic in vitro suivant la revendication 5, dans lequel le dispositif (6) fonctionnel comprend un dispositif de préhension et/ou un dispositif de pipetage.

7. Système de diagnostic in vitro suivant la revendication 5 ou 6, dans lequel le dispositif (6) fonctionnel est, par rapport à l'élément (5) d'articulation, monté d'un côté loin du capteur (7, 8) de mesure de distance.
